# EUROPÄISCHE PATENTSCHRIFT

(11) **EP 0 480 977 B1**
(45) Veröffentlichungstag und Bekanntmachung des Hinweises auf die Patenterteilung: **24.08.1994**
(21) Anmeldenummer: 90910691.6
(22) Anmeldetag: 25.06.1990
(51) Int. Cl.: F16H 57/04

(54) **SCHMIEREINRICHTUNG FÜR EIN LASTSCHALTGETRIEBE**
LUBRICATING DEVICE FOR A POWER SHIFT GEAR
DISPOSITIF DE LUBRIFICATION POUR UNE TRANSMISSION COMMUTANT SOUS CHARGE

(30) Priorität: 05.07.1989 DE 3922055
(43) Veröffentlichungstag der Anmeldung: 22.04.1992
(73) Patentinhaber: ZF FRIEDRICHSHAFEN Aktiengesellschaft, 88038 Friedrichshafen (DE)
(72) Erfinder: LEBER, Fritz, D-7990 Friedrichshafen 5 (DE); PETROWITZ, Roland, D-7990 Friedrichshafen 5 (DE)
(86) Internationale Anmeldenummer: EP9001007
(87) Internationale Veröffentlichungsnummer: WO9100447

(56) Entgegenhaltungen:
- DE-A- 1 530 737
- FR-A- 1 528 877
- GB-A- 1 166 238
- US-A- 3 593 598
- US-A- 4 023 444

## Beschreibung

Die Erfindung betrifft eine Schmiereinrichtung für ein Lastschaltgetriebe, bei dem das von einer Pumpe aus dem Sumpf des Getriebes geförderte Öl zur Betätigung von Schaltkupplungen zur Füllung einer hydrodynamischen Einheit und zur Schmierung der im Getriebe angeordneten Schaltkupplungen und Lager für Wellen sowie für Zahnräder eingesetzt wird, wobei die Versorgungsleitungen für die einzelnen Verwendungen über Drucksteuerventile, Druckreduzierventile und Sicherheitsventile druckmäßig angepaßt werden, und daß das dem Drehmomentwandler durchflossene Öl der Getriebeschmierung zugeleitet wird, wobei Schmieröl dem Versorgungs Kreislauf an einem vor der hydrodynamischen Einheit liegenden Abschnitt entnommen und über eine Sicherheitsventil den zulässigen Drücken in der Schmiereinrichtung angepaßt wird, so daß die Schmierung des Getriebes über zwei Versorgungsleitungen erfolgt.

Eine solche Schmiereinrichtung ist aus der DE-A-15 30 737 bekannt.

Aus der ATZ, 77. Jahrgang, Heft 9/1975, Seite 246 bis 249, ist weiters ein ähnliches z. B. automatisches Lastschaltgetriebe bekannt. In Bild 4, Seite 248, ist dargestellt, wie das von einer Pumpe 20 geförderte Druck- und Schmieröl über ein Wandlerdruckventil und einen Kühler dem Wandler bzw. der hydrodynamischen Einheit zugeleitet wird, wobei das vom Wandler abfließende Öl über ein Schmierventil 32 der Getriebeschmierung zugeleitet wird. Auf Seite 249 unter der laufenden Nummer 2.6.2 im zweiten Abschnitt ist beschrieben, daß vor dem Wandler das Wandlerdruckventil 31 angeordnet ist und lastabhängig den Druck vor dem Wandler bestimmt. Hinter dem Wandler ist das konstant eingestellte Schmierventil angeordnet. Dieses bestimmt den Druck hinter dem Wandler, und das durchströmende Öl wird zur Schmierung des Getriebes verwendet. Eventuell überschüssiges Öl wird direkt in die Saugleitung der Ölpumpe zurückgeleitet. Solche Schmiereinrichtungen für Lastschaltgetriebe, bei denen das den Wandler durchströmte Öl zur Schmierung des Getriebes verwendet wird, haben sich bewährt und sind auch heute noch bei Lastschaltgetrieben vorrangig bei Automatgetrieben im Einsatz. Für besonders hoch belastete Lastschaltkupplungen, insbesondere bei Lastschaltkupplungen mit längeren Rutschphasen, ist diese Art der Getriebeschmierung jedoch nicht ausreichend.

Es ist deshalb Aufgabe der Erfindung, eine Schmiereinrichtung für ein Lastschaltgetriebe nach dem Oberbegriff von Anspruch 1 weiterzuentwickeln. Insbesondere sollen höhere Schmier- und Kühlleistungen der Kupplungen erzielt werden.

Diese Aufgabe wird mit den kennzeichnenden Merkmalen vom Anspruch 1 erfüllt.

Wird zusätzlich zur bekannten Schmiermittelleitung aus dem Wandler zur Getriebeschmierung noch eine zweite Schmiermittelleitung vorgesehen, deren Schmieröl vor der hydrodynamischen Einheit entnommen wird und mit der ersten Schmiermittelleitung noch vor den Hauptschmierstellen der Getriebeschmierung zusammengeführt wird, entsteht ein gemeinsamer Kühl- und Schmiermittelstrom, der auch systembedingte längere rutschende Kupplungen ausreichend kühlt und schmiert. Dabei ist es zweckmäßig, das vom Wandlersicherheitsventil abfließende Öl nicht in den Sumpf zurückzuführen, sondern mit diesem Öl über ein Sicherheitsventil die zweite Schmiermittelleitung zu befüllen. Mit einer so gestalteten Getriebeschmiereinrichtung ist das Schmiermittelaufkommen genügend groß, ohne daß eine stärkere Schmiermittelpumpe vorgesehen werden muß. In einem anderen Einsatz ist es auch möglich, eine kleinere Pumpe ohne eine Verschlechterung der Schmierung und Kühlung des Getriebes zu verwenden. Werden die beiden Schmiermittelleitungen im Bereich des Getriebes als Ringkanäle ausgeführt, ergeben sich relativ große Querschnitte, ohne daß Wellen durch zusätzliche Bohrungen für Schmiermittelkanäle geschwächt werden müssen. Infolge der Schmiermittelleitungen in Form von Ringkanälen, die beide auf die ganze Länge des Getriebes verteilt sind - erster Ringkanal in der ersten Hälfte und zweiter Ringkanal in der zweiten Hälfte des Getriebes -, wird sowohl eine Kompaktbauweise wie auch eine hohe Momentübertragung bei den Wellen und Rädern möglich. Die großen Querschnitte der Ringkanäle werden bis zu den Kupplungen im radial verlaufenden Spalt unterstützt durch radial verlaufende Kanäle im Innenlamellenträger weiter garantiert. Die vorteilhafte Schmierölverteilung innerhalb der Kupplungen wird darüber hinaus durch Längsschlitze im Innenlamellen- und Doppellamellenträger unterstützt.

Weitere Einzelheiten der Erfindung werden anhand von Zeichnungen und Ausführungsbeispielen erläutert. Es zeigen:
- Fig. 1: die hydraulische Steuerung im Bereich der Pumpe der hydromechanischen Einheit und der Schmierung in schematischer Darstellung;
- Fig. 2: einen Teilschnitt des Lastschaltgetriebes.

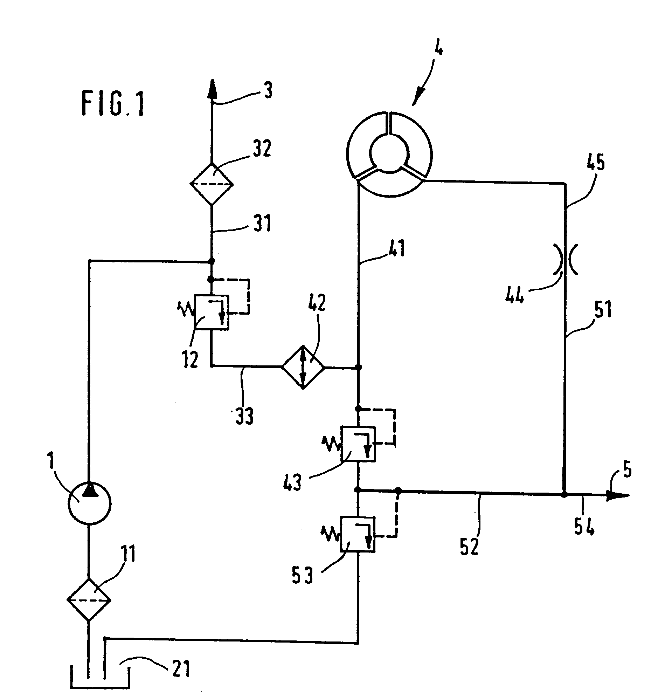

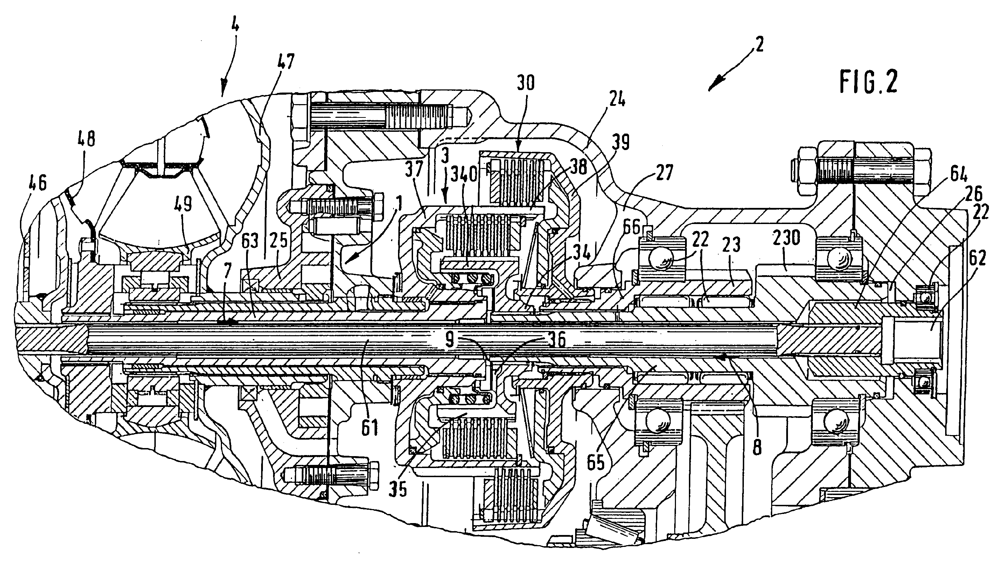

In der schematischen Darstellung der hydraulischen Steuerung nach Fig. 1 fördert die Pumpe 1 über den Filter 11 aus dem Sumpf 21 des Lastschaltgetriebes 2, das in Fig. 2 im Halbschnitt dargestellt ist. Über das Schaltdruckventil 12 wird der Druck eingestellt für die nicht dargestellten Schaltkupplungen, wobei in diesem Beispiel in der Leitung 31 zu den Schaltkupplungen noch ein zweiter Filter 32 angeordnet ist. Die Ölversorgung der hydrodynamischen Einheit, in diesem Beispiel ein hydrodynamischer Drehmomentwandler 4, erfolgt über die Leitung 33 und die Leitung 41, wobei dazwischen noch ein Kühler 42 sich befindet und der Druck in der Leitung 41 über ein Wandlerdruck-Begrenzungsventil 43 eingestellt wird. Nach der Durchströmung der hydrodynamischen Einheit 4 wird das Schmieröl über eine Drossel 44 oder auch ein an dieser Stelle angeordnetes Wandlergegendruckventil in der Leitung 45 der Getriebeschmiereinrichtung 5 über die Schmiermittelleitung 51 zugeleitet. Vom Wandlerdruck-Begrenzungsventil 43 führt eine zweite Schmiermittelleitung 52 zur Getriebeschmiereinrichtung 5, wobei der Druck in dieser Leitung über ein Sicherheitsventil 53 begrenzt wird und beide Schmiermittel-Versorgungsleitungen 51, 52 noch vor der Getriebeschmiereinrichtung 5 zu einer Leitung 54 zusammengeführt werden. In dem Lastschaltgetriebe, in diesem Beispiel einem Wendegetriebe 2 nach Fig. 2, erfolgt der Antrieb in bekannter Weise über die Mitnahmescheibe 46 auf das Pumpenrad 47 und von dort auf das Turbinenrad 48 des hydrodynamischen Drehmomentwandlers 4. Das Leitrad 49 ist mit dem Getriebegehäuse 24 über einen Freilauf in bekannter Weise verbunden. Da das Lastschaltgetriebe noch einen motorseitig angetriebenen Nebenabtrieb 62 hat, wird durch das ganze Getriebe eine zentrale Welle 61 geführt. Das Turbinenrad 48 treibt über die Eingangswelle 63 den Doppellamellenträger 37 von beiden Schaltkupplungen 3, 30. Nach dem Drehmomentwandler 4 ist in einem Getriebeflansch 25 noch die Schmier- und Druckmittelpumpe 1 angeordnet. Der Innenlamellenträger 34 der ersten innenliegenden Schaltkupplung 3 ist mit der Zwischenwelle 65 drehfest und diese mit dem Zahnrad 230 fest verbunden. Der Außenlamellenträger 39 hat über eine zweite Zwischenwelle 66 eine drehfeste Verbindung zu einem Zahnrad 23, wobei vorrangig die Zwischenwellen 65 und 66 über Lager 22 im Getriebegehäuse 24 abgestützt werden. Die nicht dargestellte Abtriebswelle des Getriebes 2 ist achsversetzt angeordnet und wird wahlweise von den Zahnrädern 23 und 230 angetrieben. Zwischen der zentralen Welle 61 und der Eingangswelle 63 in der eingangsseitigen Hälfte des Getriebes wird der erste Ringkanal 7 gebildet, der als erste Schmiermittelleitung 51 das dem Wandler 4 durchflossene Schmieröl bis zu einem Spalt 9, der in radialer Richtung zu den Doppelkupplungen 3, 30 führt, geleitet. Parallel zu diesem Spalt sind zur Vergrößerung des Querschnittes für den Öldurchfluß ebenfalls radial verlaufende Kanäle 36 im Innenlamellenträger 34 angeordnet. Da aber beim Inch-Betrieb dieses Wendegetriebes 2 die Kupplungen 3, 30 hoch beansprucht werden, ist zwischen der zentralen Welle 61 und teilweise dem Anschlußstück 64 für den Nebenabtrieb 62 sowie der Zwischenwelle 65 auf der anderen Seite des Getriebes - Ausgangsseite - noch ein zweiter Ringkanal 8 angeordnet. Über diesen Ringkanal wird das Schmieröl, das vor dem hydrodynamischen Drehmomentwandler 4 entnommen worden ist, zum Spalt 9 und zu den Kanälen 36 geleitet. Damit wird die Schmierung und Kühlung der Kupplungen 3, 30 in Verbindung mit dem ersten Ringkanal 7 auch bei hohen Belastungen, also in einem Dauerrutschbetrieb, sichergestellt. Das Schmieröl wird zum zweiten Ringkanal 8 vom außerhalb des Getriebes 2 angeordneten Sicherheitsventil 53 über den Ringraum 26, der sich im Getriebegehäuse 24 befindet, geleitet. Der über die Kanäle 36 verstärkte radial nach außen verlaufende Spalt 9 führt beide Schmierölströme 51, 52, wie in Fig. 1 als Leitung 54 dargestellt, zu den Schmierstellen in den Kupplungen 3, 30, wobei über Längsschlitze 35, 38, die sowohl im in Achsrichtung verlaufenden Teil 340 des Innenlamellenträger 34 wie auch im Doppellamellenträger 37 angeordnet sind, eine bessere Verteilung des Schmieröls innerhalb der Lamellenpakete der Kupplungen 3, 30 gewährleistet wird. Die weitere Schmierung der Lager 22 und Zahnräder 23, 230 erfolgt über geeignete Ölleiteinrichtungen, z. B. über Durchbrüche 27 im Getriebegehäuse 24.

### Bezugszeichen

- 1: Schmier- und Druckmittelpumpe
- 11: Filter
- 12: Schaltdruckventil
- 2: Lastschaltgetriebe
- 21: Sumpf
- 22: Lager
- 23: Zahnräder
- 230: Zahnräder
- 24: Getriebegehäuse
- 25: Flansch
- 26: Ringraum
- 27: Durchbrüche
- 3: Schaltkupplungen
- 30: Schaltkupplungen
- 31: Leitung
- 32: Filter
- 33: Leitung
- 34: Innenlamellenträger
- 340: in Achsrichtung verlaufendes Teil des Innenlamellenträgers
- 35: Längsschlitze
- 36: Kanäle
- 37: Doppellamellenträger
- 38: Längsschlitze
- 39: Außenlamellenträger
- 4: hydrodynamische Einheit/hydrodynamischer Drehmomentwandler
- 41: Leitung
- 42: Kühler
- 43: Wandlerdruck-Begrenzungsventil
- 44: Drossel
- 45: Leitung
- 46: Mitnehmerscheibe
- 47: Pumpenrad
- 48: Turbinenrad
- 49: Leitrad
- 5: Getriebeschmiereinrichtung
- 51: Schmiermittelleitung/Schmiermittelversorgungsleitung
- 52: zweite Schmiermittelleitung
- 53: Sicherheitsventil
- 54: Leitung
- 6: Wellen
- 61: zentrale Welle/Nebenabtriebswelle
- 62: Nebenabtrieb
- 63: Eingangswelle
- 64: Anschlußstück/Nebenabtrieb
- 65: Zwischenwelle
- 66: zweite Zwischenwelle
- 7: Ringkanal
- 8: Ringkanal
- 9: radial verlaufender Spalt

## Patentansprüche

1. Schmiereinrichtung für ein Lastschaltgetriebe (2), bei dem das von einer Pumpe (1) aus dem Sumpf (21) des Getriebes (2) geförderte Druck- und Schmieröl zur Betätigung von Schaltkupplungen (3, 30), zur Füllung einer hydrodynamischen Einheit (4) und zur Schmierung der im Getriebe (2) angeordneten Schaltkupplungen (3, 30) und Lager (22) für Wellen (6) sowie Zahnräder (23, 230) zur Anwendung kommt, wobei die Versorgungsleitungen (31, 41, 51, 52) für die einzelnen Verwendungen über Drucksteuerventile, Druckreduzierventile (12, 43) und Sicherheitsventile (53) druckmäßig angepaßt werden und daß das dem Drehmomentwandler (4) durchflossene Öl der Getriebeschmierung (5) zugeleitet wird, wobei Schmieröl dem Versorgungskreislauf an einem vor der hydrodynamischen Einheit (4) liegenden Abschnitt (Leitung 41) entnommen und über ein Sicherheitsventil (53) den zulässigen Drücken in der Schmiereinrichtung (5) angepaßt wird, so daß die Schmierung des Getriebes (2) über zwei Versorgungsleitungen (51, 52) erfolgt, dadurch **gekennzeichnet**, daß die Versorgungsleitungen (51, 52) vor den zu kühlenden und schmierenden Kupplungen (3, 30) zu einer gemeinsamen Leitung (54, 9, 36) Zusammengeführt werden.

2. Schmiereinrichtung für ein Lastschaltgetriebe (2) nach Anspruch 1, dadurch **gekennzeichnet**, daß sowohl die von der hydrodynamischen Einheit (4) kommende Versorgungsleitung (51) für die Getriebeschmierung (5) wie auch die vor der hydrodynamischen Einheit (4) abgezweigte zweite Versorgungsleitung (52) als Ringkanäle (7, 8) zwischen einer Zentralwelle (61) und Hohlwellen (Eingangswelle 63, Zwischenwelle 65) angeordnet sind.

3. Schmiereinrichtung für ein Lastschaltgetriebe (2) nach Anspruch 2, dadurch **gekennzeichnet**, daß die Ringkanäle (7, 8) in Längsrichtung des Getriebes (2) nebeneinander mit zumindest gleichem Innendurchmesser angeordnet sind.

4. Schmiereinrichtung für ein Lastschaltgetriebe (2) nach Anspruch 3, dadurch **gekennzeichnet**, daß der erste Ringkanal (7) zwischen einer zentralen Welle (61), die zum Nebenabtrieb (62) führt, der am Ausgang des Getriebes liegt und einer Eingangswelle (63), die als Hohlwelle ausgeführt, angeordnet ist, und daß der zweite Ringkanal (8) zwischen der zentralen Welle (61) und einem Anschlußstück (64) vom Nebenabtrieb (62) und einer als Hohlwelle ausgeführten Zwischenwelle (65), die auf der Eingangsseite mit dem Innenlamellenträger (34) der ersten innenliegenden Kupplung (3) drehfest und auf der Ausgangsseite mit einem Zahnrad (230) fest verbunden ist, und daß beide Ringkanäle (7, 8) und damit beide Schmierölströme der Schmiermittelleitungen (51, 52) an einem in radialer Richtung verlaufenden Spalt (9) zusammentreffen.

5. Schmiereinrichtung für ein Lastschaltgetriebe (2) nach Anspruch 4, dadurch **gekennzeichnet**, daß der radial verlaufende Schmierölspalt (9) zu dem Doppelkupplungspaket (3, 30) führt, und daß zur Vergrößerung des Querschnittes dieser Schmierölleitung im Innenlamellenträger (34) noch in radialer Richtung verlaufende Kanäle (36) angeordnet sind.

6. Schmiereinrichtung für ein Lastschaltgetriebe (2) nach Anspruch 5, dadurch **gekennzeichnet**, daß der Schmierölstrom im radial verlaufenden Schmierölspalt (9) und den Kanälen (36) zum in Achsrichtung verlaufenden Teil (340) des Innenlamellenträgers (34) der radial inneren Kupplung (3) geleitet wird.

7. Schmiereinrichtung für ein Lastschaltgetriebe (2) nach Anspruch 6, dadurch **gekennzeichnet**, daß im in Achsrichtung verlaufenden Teil (340) des Innenlamellenträgers und in gleicher Richtung verlaufenden Teiles des Doppellamellenträgers Längsschlitze (35, 38) angeordnet sind, die eine bessere Kühlung und Schmierung der Lamellenpakete von den Kupplungen (3, 30) ermöglichen.

8. Schmiereinrichtung für ein Lastschaltgetriebe (2) nach Anspruch 7, dadurch **gekennzeichnet**, daß zur weiteren Steuerung des Schmierölstromes zu den Lagern (22) und Zahnrädern (23, 230) entsprechende Durchbrüche (27) im Getriebegehäuse (24) angeordnet sind.

## Claims

1. A lubricating device for a power shift gear (2) with which the hydraulic and lubricating oil delivered from a pump (1) out of the sump (21) of the gear (2) is used to actuate clutches (3, 30), to fill a hydrodynamic unit (4) and to lubricate the clutches (3, 30) disposed in the gear (2) and bearing (22) for shafts (6) and also toothed wheels (23, 230), whereby the pressure of the supply lines (31, 41, 51, 52) is adapted to the corresponding application by means of pressure-control valves, pressure-relief valves (12, 43) and safety valves (53) and in that the oil which has flowed through the hydrodynamic torque converter (4) is conveyed to the gear lubricating device (5), whereby lubricating oil is taken from the supply circuit at a section (line 41) which lies upstream of the hydrodynamic unit (4) and is adapted by means of a safety valve (53) to the permissible pressures in the lubricating device (5), so that the lubrication of the gear (2) is effected via two supply lines (51, 52), characterized in that the supply lines (51, 52) are joined to form one line (54, 9, 36) upstream of the couplings (3, 30) which are to be cooled and lubricated.

2. A lubricating device for a power shift gear (2) according to claim 1, characterized in that the supply line (51) which comes from the hydrodynamic unit (4) for the gear lubricating device (5) and also the second supply line (52) which branches off upstream of the hydrodynamic unit, are disposed as ring channels (7, 8) between a central shaft (61) and hollow shafts (input shaft 63, intermediate shaft 65).

3. A lubricating device for a power shift gear (2) according to claim 2, characterized in that the ring channels (7, 8) are disposed in longitudinal direction of the gear (2) side by side with at least the same inside diameter.

4. A lubricating device for a power shift gear (2) according to claim 3 characterized in that the first ring channel (7) is disposed between a central shaft (61) which leads to the power take-off (62), the latter lying on the exit of the gear and an input shaft (63) which is constructed as a hollow shaft and in that the second ring channel (8) is tightly connected between the central shaft (61) and a connecting piece (64) of the power take-off (62) and an intermediate shaft (65) constructed as a hollow shaft which is rotationally fixed on the input side with the inner multi-plate carrier (34) of the first inner lying coupling (3) and is tightly connected on the output side with a toothed wheel (230) and in that both ring channels (7, 8) and consequently both lubricating oil flows of the lubricant lines (51, 52) meet at a gap (9) which extends in a radial direction.

5. A lubricating device for a power shift gear (2) according to claim 4, characterized in that the radially extending lubricating oil gap (9) leads to the double coupling packet (3, 30) and that to enlarge the cross section of this lubricating oil line, further channels (36) extending in a radial direction are disposed in the inner multi-plate carrier (34).

6. A lubricating device for a power shift gear (2) according to claim 5, characterized in that the lubricating oil flow in the radially extending lubricating oil gap (9) and the channels (36) is guided to the part (340) which extends axially, of the inner multi-plate carrier (34) of the radial inner coupling (3).

7. A lubricating device for a power shift gear (2) according to claim 6, characterized in that in the part (340) which extends axially, of the inner multi-plate carrier and in the part of the double multi-plate carrier which extends in the same direction, longitudinal slots (35, 38) are disposed which allow a better cooling and lubrication of the multi-plate packets of clutches (3, 30)

8. A lubricating device for a power shift gear (2) according to claim 7, characterized in that to further control the lubricating oil flow to the bearings (22) and toothed wheels (23, 230), corresponding openings (27) are disposed in the gear casing (24).

## Revendications

1. Dispositif de lubrification pour une boîte de vitesses couplable sous charge (2) sur laquelle l'huile de lubrification et l'huile sous pression refoulée par une pompe (1) à partir du carter (21) de la boîte de vitesses (2) est utilisée pour la commande d'embrayages (3, 30), pour le remplissage d'une unité hydrodynamique (4) et pour la lubrification des embrayages (3, 30) installés dans la boîte de vitesses (2) et des roulements (22) pour les arbres (6) ainsi que des engrenages (23, 230), sachant que la pression des conduits d'alimentation (31, 41, 51, 52) est adaptée aux diverses applications par des valves de modulation de pression, des valves de réduction de pression (12, 43) et des valves de sécurité (53) et que l'huile en circulation dans le convertisseur de couple (4) est amenée à la lubrification (5) de la boîte de vitesses, sachant que de l'huile de lubrification est prélevée du circuit d'alimentation à un segment (conduit 41) se trouvant avant l'unité hydrodynamique (4) et est adaptée aux pressions admissibles dans le dispositif de lubrification (5) par une valve de sécurité (53), de telle sorte que la lubrification de la boîte de vitesses (2) est réalisée par deux conduits d'alimentation (51, 52), **caractérisé** en ce que les conduits d'alimentation (51, 52) sont réunis en un conduit commun (53, 9, 36) avant les embrayages (3, 30) à refroidir et à lubrifier.

2. Dispositif de lubrification pour une boîte de vitesses couplable sous charge (2) selon la revendication 1, **caractérisé** en ce que le conduit d'alimentation (51) venant de l'unité hydrodynamique (4) pour la lubrification de la boîte de vitesses (5) aussi bien que le deuxième conduit d'alimentation (52) dérivé avant l'unité hydrodynamique (4) sont disposés en canaux circulaires (7, 8) entre un arbre central (61) et des arbres creux (arbre d'entrée 63, arbre intermédiaire 65).

3. Dispositif de lubrification pour une boîte de vitesses couplable sous charge (2) selon la revendication 2, **caractérisé** en ce que les canaux circulaires (7,8) sont disposés dans le sens longitudinal de la boîte de vitesses (2) l'un à côté de l'autre avec au moins le même diamètre intérieur.

4. Dispositif de lubrification pour une boîte de vitesses couplable sous charge (2) selon la revendication 3, **caractérisé** en ce que le premier canal circulaire (7) est disposé entre un arbre central (61) qui conduit à la prise de force (62) se trouvant à la sortie de boîte de vitesses et un arbre d'entrée (63) réalisé en tant qu'arbre creux et en ce que le deuxième canal circulaire (8) entre l'arbre central (61) et une pièce de raccordement (64) de la prise de force (62) et un arbre intermédiaire (65) réalisé en tant qu'arbre creux qui, sur le côté entrée, est relié de façon solidaire en rotation avec le porte-disques intérieurs (34) du premier embrayage intérieur (3) et de façon inamovible avec un engrenage (230) sur le côté sortie, et en ce que les deux canaux circulaires (7, 8) et, par là-même, les deux flux d'huile de lubrification des conduits du lubrifiant (51, 52) se rejoignent sur une fente (9) orientée dans le sens radial.

5. Dispositif de lubrification pour une boîte de vitesses couplable sous charge (2) selon la revendication 4, **caractérisé** en ce que la fente d'huile de lubrification (9) orientée dans le sens radial conduit au double jeu d'embrayages (3, 30) et en ce que, pour agrandir la section transversale de ce conduit d'huile de lubrification, il y a encore des canaux (36) orientés dans le sens radial qui sont installés dans le porte-disques intérieurs (34).

6. Dispositif de lubrification pour une boîte de vitesses couplable sous charge (2) selon la revendication 5, **caractérisé** en ce que le flux d'huile de lubrification est amené dans la fente (9) d'huile de lubrification orientée dans le sens radial et dans les canaux (36) vers la partie (340) du porte-disques intérieurs (34) orientée dans le sens axial de l'embrayage (3) intérieur radial.

7. Dispositif de lubrification pour une boîte de vitesses couplable sous charge (2) selon la revendication 6, **caractérisé** en ce que des fentes longitudinales (35, 38) sont disposées dans la partie (340) du porte-disques intérieurs orientée dans le sens axial ainsi que dans la partie du double porte-disques orientée dans le même sens, ce qui permet un meilleur refroidissement et une meilleure lubrification du jeu de disques des embrayages (3, 30).

8. Dispositif de lubrification pour une boîte de vitesses couplable sous charge (2) selon la revendication 7, **caractérisé** en ce que des ouvertures (27) correspondantes sont disposées dans le carter de la boîte de vitesses (24) pour l'acheminement ultérieur du courant d'huile de lubrification vers les roulements (22) et engrenages (23, 230).
